# EUROPÄISCHE PATENTANMELDUNG

(11) **EP 0 563 466 A1**
(43) Veröffentlichungstag der Anmeldung: **06.10.1993**
(21) Anmeldenummer: 92250075.6
(22) Anmeldetag: 31.03.1992
(51) Int. Cl.: B29C 45/76, B29C 45/82

(54) **Verfahren und Einrichtung zur Ermittlung von Prozessparameter-Summenwerten zur Steuerung und Regelung von Spritzgiessmaschinen**

(71) Anmelder: Hummel, Erhard, D-09120 Chemnitz (DE)
(72) Erfinder: Fechner, Olav, Dipl.-Ing., O-9044 Chemnitz (DE); Hummel, Erhard, Dipl.-Ing., O-9051 Chemnitz (DE); Schneider, Hans, Dipl.-Ing., O-9122 Adorf (DE)

(57) **Zusammenfassung**

Durch das Verfahren soll die für den Prozeßparameter-Summenwert äquivalente Zeitdauer verlängert und dadurch ein repräsentativer Abschnitt der Werkzeugfüllphase und der Werkstoffkompressionsphase erfaßt werden.

Bei hydraulisch oder elektrisch angetriebenen Spritzgießmaschinen ist für die Werkzeugfüllphase eine Spritzkraftbegrenzung vorgegeben. Der Umschaltwert auf Nachdruck wird vom Leistungsbedarf für den Werkzeugfüllvorgang nach Zuschalten der Spritzkraftbegrenzung abgeleitet. Als Prozeßparameter-Summenwert wird eine Zeitdauer aus der Werkzeugfüllphase verwendet. Als Beginn der Zeitdauer wird ein Kraftwert in der Werkzeugfüllphase unterhalb des Spritzkraftbegrenzungswertes festgelegt und als Ende der Zeitdauer der Umschaltpunkt auf Nachdruck gemessen. Die Zeitdauer wird als Prozeßparameter-Summenwert verwendet und dient der Steuerung und Regelung sowie der Qualitätsbewertung der gespritzten Werkstücke.

## Beschreibung

Die Erfindung betrifft ein Verfahren und eine Einrichtung zur Ermittlung von Prozeßparameter-Summenwerten zur Steuerung und Regelung von Spritzgießmaschinen nach dem Oberbegriff des Anspruches 1.

Es wurde bereits ein Verfahren zur Ermittlung von Prozeßparameter-Summenwerten vorgeschlagen (EP-Anm. 91 250 276.2). Es bezieht sich auf hydraulische Spritzgießmaschinen und Pressen, bei denen für den Antriebsölstrom ein Begrenzungsdruck vorgegeben ist. In einem Leitungsabschnitt zwischen dem Ort der Förderstromreduzierung während der Druckbegrenzung und dem Arbeitsglied über eine während der Druckbegrenzung unveränderlichen Drosselstrecke werden die Druckdifferenz und ein Druckdifferenzwert bei Beginn der Reduzierung der Antriebsölstrommenge erfaßt. Die Zeitdauer bis zum Erreichen eines zweiten Druckdifferenzwertes, der größer oder gleich einem Druckdifferenzwert Null ist und einer weiteren Reduzierung der Antriebsölstrommenge entspricht, wird zur Steuerung der im nachfolgenden Arbeitszyklus vorgegebenen Parameter verwendet. Die Druckdifferenzwerte werden als digitale Signale dargestellt und als Maß für den momentanen Leistungsbedarf am Arbeitsglied ausgewertet. Die Zeitdauer zwischen dem ersten und zweiten Druckdifferenzwert wird als Prozeßparameter-Summenwert erfaßt und neben der Steuer- und Regelfunktion auch zur Qualitätskontrolle der gespritzten Werkstücke benutzt. Hierbei treten jedoch folgende Schwierigkeiten auf:
Bis zum Erreichen der Kompressionsphase ist es üblich, mit konstanter Spritzgeschwindigkeit zu arbeiten. Dadurch wird in diesem Summenparameter nur ein geringer Teil der Kompressionsphase berücksichtigt. Eine umfassende, sich aus der Füll- und Kompressionsphase ergebende Qualitätsrelevanz ist dadurch nicht gegeben. Die zwischen dem ersten und zweiten Druckdifferenzwert gemessene Zeitdauer ist sehr kurz und nur bei groben Abweichungen qualitätsrelevant auswertbar.

Die Erfindung hat zur Aufgabe, ein Verfahren und eine Einrichtung zur Ermittlung von Prozeßparameter-Summenwerten zur Steuerung und Regelung von Spritzgießmaschinen zu schaffen, das die für den Prozeßparameter-Summenwert äquivalente Zeitdauer verlängert, dadurch besser auswertbar gestaltet und einen repräsentativeren Abschnitt der Werkzeugfüllphase und der Werkstoffkompressionsphase erfaßt.

Diese Aufgabe wird, ausgehend von einem Verfahren und einer Einrichtung zur Ermittlung von Prozeßparameter-Summenwerten zur Steuerung und Regelung von Spritzgießmaschinen nach dem Oberbegriff des Anspruches 1, erfindungsgemäß durch das Kennzeichen des Anspruches 1 gelöst.
Die Unteransprüche sind vorteilhafte Gestaltungen einzelner Verfahrensschritte und deren Anwendung.

Durch die erfindungsgemäße Lösung wird die bekannte Abhängigkeit der Qualität der Werkstücke von der Reproduzierbarkeit der Füll- und Kompressionsphase genutzt und relevante Prozeßparameter-Summenwerte über einen längeren Zeitabschnitt der Spritzdauer ermittelt. Diese Prozeßparameter-Summenwerte dienen sowohl der Steuerung und Regelung der Spritzgießmaschinen als auch zum Nachweis der Qualität der gespritzten Werkstücke.

In den Zeichnungen ist ein Ausführungsbeispiel der Erfindung dargestellt. Es zeigen:
- Fig. 1: die Diagramme I, II und III, wobei über den Zeitachsen 1
in I die Spritzkraft, Ordinate 2
in II der Werkzeuginnendruck, Ordinate 3
in III die Signaldauer dargestellt sind;
- Fig. 2: den Hydraulik-Schaltplan der Spritzseite mit zentraler Strom- und Drucksteuerung und
- Fig. 3: den Hydraulik-Schaltplan mit Regelventil.

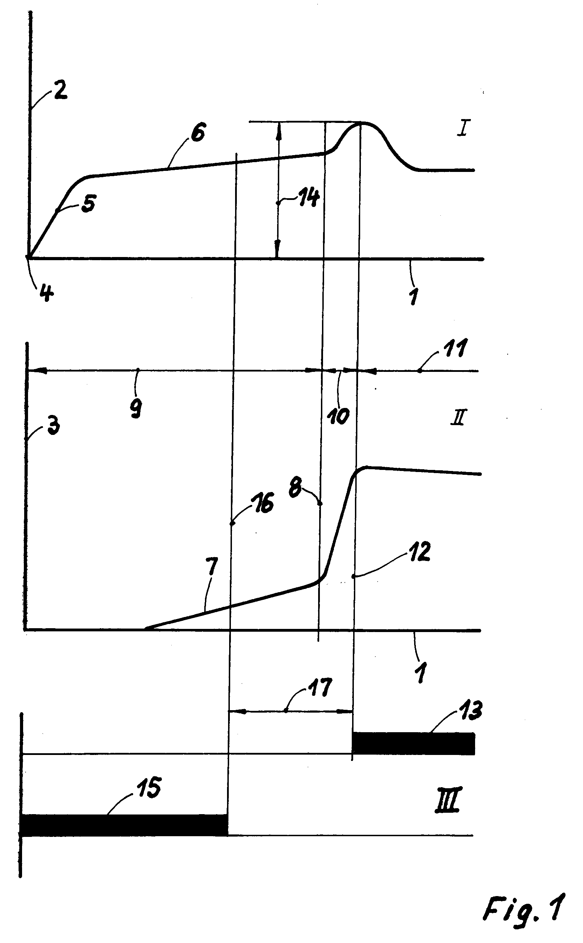

Zum Zeitpunkt 4 wird der Einspritzvorgang zugeschaltet (Fig.1, Diagramm I). Zuerst wird das Düsen-Anguß-System durchspritzt, wodurch es zu einem steilen Kraftanstieg 5 kommt. Während des darauffolgenden Werkzeugfüllvorganges steigt die erforderliche Spritzkraft im allgemeinen weiter an. Nach Erreichen eines Werkzeuginnendruckmeßgliedes durch die Fließfront kommt es zum allmählichen, dem Kraftanstieg 6 proportionalen, Werkzeuginnendruckanstieg 7 bis zum Erreichen der volumetrischen Füllung zum Zeitpunkt 8 (Diagramm II). Zum Zeitpunkt 8 ist die rein dynamische Füllphase 9 beendet, und es kommt in der nun beginnenden Kompressionsphase 10 zum Übergang von der dynamischen Füllphase zur quasistatischen Nachdruckphase 11.

In der Kompressionsphase 10 wird zum Zeitpunkt 12 von Spritzen auf Nachdruck umgeschaltet. Die Umschaltung geschieht durch das die Verminderung des Leistungsbedarfes des die Formmasse in den Werkzeughohlraum verdrängenden Systems kennzeichnende Signal 12 (Diagramm III). Dabei wird die Formmasse bei gleichzeitiger Kraftbegrenzung auf den Kraftbegrenzungswert 14 komprimiert.
Damit ist das Signal 13 ein einem exakten Werkzeuginnendruck zugeordnetes Signal, ohne daß der Werkzeuginnendruck gemessen werden muß.

Für die Regelung und/oder Überwachung des Einspritzvorganges wird ein zweites Signal benötigt, das ein von der Einspritzmengen-, Einspritzweg-, Einspritzzeit- und Werkzeuginnendruckeinstellung unabhängiges, mit der Spritzkraftbegrenzung im Zusammenhang stehendes Signal 15 liefert, das um einen feststehenden Betrag der Spritzkraftbegrenzung vorgelagert ist. Dieses Signal 15 ist ein Spritzkraftbedarf in der Füllphase und beträgt maximal die Hälfte des Spritzkraftbegrenzungswertes.

Der zeitliche Abstand dieses vorgegebenen Spritzkraftbedarfes zum, durch den von der bereits beschriebenen Leistungsbedarfsminderung abhängigen Umschaltpunkt (Zeitpunkt 12) exakt definierten, Beginn der quasistatischen Nachdruckphase 11 stellt einen den Einspritzvorgang und seine Reproduzierbarkeit charakterisierenden Prozeßparameter-Summenwert dar.

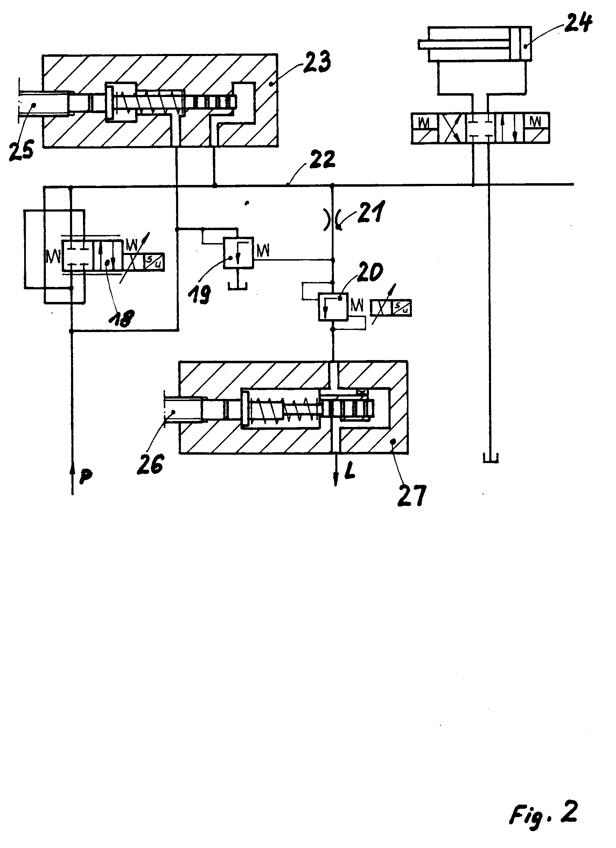

Das durch den Ölstrom über das Vorsteuerventil einer Druckbegrenzungsventilkombination (Fig. 2) anfallende Signal 15 ist im Diagramm III dargestellt. Dieses Signal 15 startet zum Zeitpunkt 16 eine Zeitmeßeinrichtung, die die Zeitdauer 17 bis zum Erreichen des Umschaltpunktes auf die Nachdruckphase 11 zum Zeitpunkt 12 ermittelt.
Die Zeitdauer 17 erfaßt einen druckabhängig festgelegten Teil der Füllphase 9 und die Kompressionsphase 10 im allgemeinen Anwendungsfall. In speziellen Fällen kann der das Signal 15 bewirkende Spritzkraftbedarf auch näher an der Kompressionsphase liegen. Änderungen von Parametern, nicht vollständig entformte Werkzeuge oder verschlissene Rückstromsperren bewirken eine Veränderung der Zeitdauer 17 zwischen den Signalen 15 und 13.

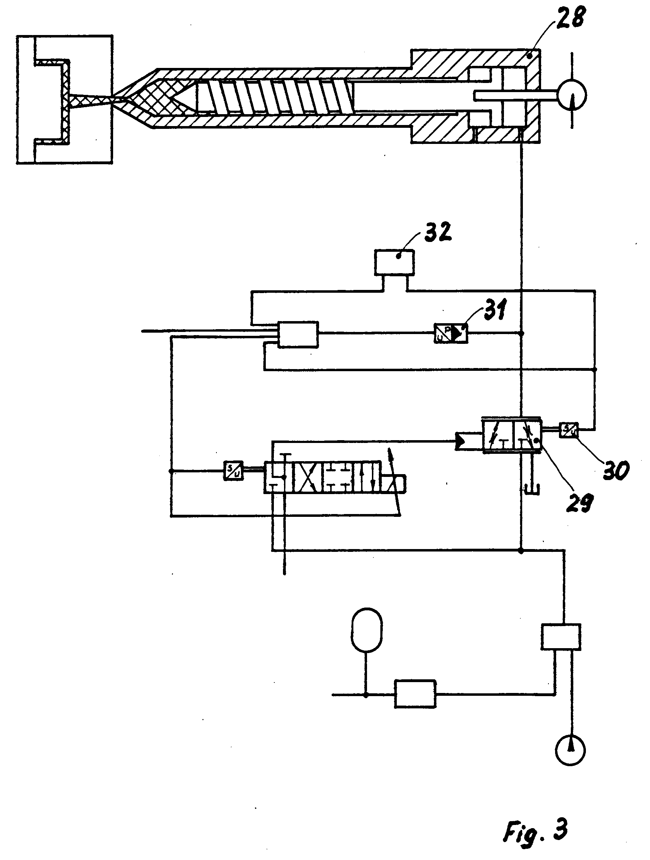

Eine in Fig. 2 dargestellte hydraulische Schaltung dient zur Erläuterung des Verfahrens. Die Steuerung einer Spritzgießmaschine hat eine zentrale Strom- und Drucksteuerung- Dazu besitzt sie ein Proportionaldrosselventil 18, ein Druckdifferenzventil 19 und ein Proportionaldruckbegrenzungsventil 20. Der Vorsteuerölstrom für das Druckdifferenzventil 19 wird über die Drossel 21 aus der Leitung 22 nach dem Proportionaldrosselventil 18 abgezweigt. Durch das Proportionaldruckbegrenzungsventil 20 wird der Vorsteuerdruck des Druckdifferenzventils 19 begrenzt, so daß dieses gleichzeitig die Druckbegrenzungsfunktion wahrnimmt.
Ein Druckdifferenzsensor 23 mißt die Druckdifferenz über das Proportionaldrosselventil 18.
Erfährt der Spritzzylinder 24 während der Werkzeugfüllung eine hohe Leistungsreduzierung nach dem Ansprechen der Druckbegrenzung über das Druckdifferenzventil 19, spricht der Initiator 25 des Druckdifferenzsensors 23 an, und es wird das Signal 13 zur Umschaltung auf Nachdruck ausgegeben.
Bevor das Druckdifferenzventil 19 öffnet, wird bereits für eine konstruktiv vom Proportionaldruckbegrenzungsventil 20 vorgegebene Druckdifferenz ein entsprechender Leckölstrom freigegeben, der ab einer entsprechenden Höhe das Signal 15 des Initiators 26 des Druckmeldesensors 27 abschaltet. Eine nicht dargestellte elektrische Steuerung ermittelt die zeitliche Differenz der Signale 15 und 13 als Zeitdauer 17 und verwendet diese, entsprechend einem Steuerprogramm, zur Parameterregelung im Anfahrvorgang und zur Prozeßkontrolle im Betrieb.
Eine alternative hydraulische Steuerung ist in Fig. 3 dargestellt. Vor dem Spritzzylinder 28 befindet sich ein Regelventil 29, das ein Meßsystem 30 zur Messung der Lage des Steuerkolbens im Vergleich zum Steuergehäuse besitzt. Durch dieses Regelventil 29 wird der dem Spritzzylinder 28 zugeführte Ölstrom entsprechend der Spritzkolbengeschwindigkeit geregelt. Ein zwischen dem Spritzzylinder 28 und dem Regelventil 29 angeordneter Druckmeßwertgeber 31 begrenzt, der Stromregelung überlagert, den Spritzdruck.

Beim Erreichen des Drucksollwertes wird der Drosselspalt im Regelventil 29 so geregelt, daß der Druck erhalten bleibt. Bei einer entsprechenden Absenkung der Spritzkolbengeschwindigkeit erreicht der Kolben des Regelventils 29 die Lage der minimalen Leistungsbedarfsanforderung am Spritzzylinder 28 und damit den Umschaltpunkt auf Nachdruck zum Zeitpunkt 12. Die Meldung erfolgt über das Meßsystem 30 in Verbindung mit einer Auswerteelektronik 32.
Unterhalb des zur Absenkung der Spritzkolbengeschwindigkeit führenden Spritzdruckbegrenzungswertes wird vom Druckmeßwertgeber 31 ein Druckschwellenwert ausgegeben. Dieser Druckschwellenwert wird als Signal 15 signalisiert. Zwischen dem Signal 15 des vorgegebenen Druckschwellenwertes und der Absenkung des Leistungsbedarfes am die Formmasse in den Werkzeughohlraum verdrängenden System auf den Wert des Umschaltpunktes (Signal 13), der als Wegänderung am Steuerkolben des Regelventiles 29 ermittelt wird, wird die Zeitdauer 17 gemessen und für die Regelung und/oder Überwachung verwendet.
Die Differenz zwischen dem Druckschwellenwert und dem Druckbegrenzungswert, der die Spritzgeschwindigkeitsabsenkung auslöst, sollte so groß gewählt werden, daß die Zeitmessung in der Füllphase 9 beginnt, also vor dem Beginn des steilen Druckanstieges der Kompressionsphase 10 liegt, aber im allgemeinen nicht weniger als die Hälfte der zur Förderstromreduzierung führenden Druckbegrenzung betragen. Bei der Überwachung des Werkzeugfüllvorganges dickwandiger optischer Teile kann eine Abweichung davon günstig sein, da mit extrem geringen Geschwindigkeiten gearbeitet wird und sich damit auch geringe Fülldrücke einstellen, aber sehr hohe Kompressionsdrücke erforderlich sind.

Für die Regelung ist im Anfahrvorgang eine feste Differenz zwischen den Spritzkraftwerten für die Spritzkraftbegrenzung und dem vorgelagerten Spritzkraftwert zum Ermitteln der qualitätsrelevanten Zeitdauer 17 zwischen dem Spritzkraftwert und dem, infolge des Erreichens des minimalen Leistungsbedarfes am die Formmasse in den Werkzeughohlraum verdrängenden System ausgelösten Umschaltsignal von vorzugsweise weniger als zwanzig Prozenz der Spritzkraft vorzugeben. Diese qualitätsrelevante Zeitdauer 17 sollte vorzugsweise zwischen einem Drittel und einem Sechstel der Gesamtspritzzeit liegen.

Bei einer mit elektrischen Linearmotoren angetriebenen Spritzgießmaschine wird die sich bei Kraftbegrenzung ergebende Leistungsminderung im die Formmasse verdrängenden System aus den elektrischen Größen Strom und Spannung als Signal 13 ermittelt. Das vorher liegende Kraftsignal wird bei derartigen Maschinen aus der elektrischen Leistung vor Ansprechen der Spritzkraftbegrenzung oder aus dem Massedruck im Schneckenvorraum als Signal 15 ermittelt.

Mit der Erfindung wird für die Überwachung der bisher schon bekannten Abhängigkeit der Qualität des Formteiles von der Reproduzierbarkeit der Füll- und Kompressionsphase eine bisher nicht bekannte repräsentative qualitätsrelevante Beziehung der Zeitdauer zwischen einem Wert des Spritzkraftaufbaues und der bei vollständiger Werkzeugfüllung zur erheblichen Leistungsbedarfsverringerung am die Formmasse in den Formhohlraum verdrängenden System führenden Spritzkraftbegrenzung genutzt.

Damit wird für die Nachweisführung bei Produkthaftung eine Unterlage über die Einhaltung der Herstellungsparameter geschaffen, die durch die Einbeziehung vieler Einzelparameter eine repräsentative Qualitätsaussage durch einen einzigen Summenparameter ergeben. Die in den Arbeitsprozeß einbezogene on-line-Qualitätskontrolle und Fehlerteileaussonderung führt zu einer Verbesserung der Wirtschaftlichkeit des Betriebes von Spritzgießmaschinen.

## Patentansprüche

1. Verfahren zur Ermittlung von Prozeßparameter-Summenwerten zur Steuerung und Regelung von hydraulisch oder elektrisch angetriebenen Spritzgießmaschinen, bei denen für die Werkzeugfüllphase eine Spritzkraftbegrenzung vorgegeben ist, deren Einhaltung über die Vorlaufgeschwindigkeit des Spritzkolbens gesteuert wird; bei denen der Umschaltwert auf Nachdruck vom Leistungsbedarf für den Werkzeugfüllvorgang nach Zuschalten der Spritzkraftbegrenzung abgeleitet wird, und bei denen als Prozeßparameter-Summenwert eine Zeitdauer aus der Werkzeugfüllphase verwendet wird; sowie zur Qualitätsbewertung der Werkstücke,
dadurch gekennzeichnet,
daß in der Werkzeugfüllphase (9) unterhalb des Spritzkraftbegrenzungwertes (14) ein Kraftwert des Werkzeugfüllvorganges als Beginn für eine Zeitdauer (17) festgelegt wird;
als Ende der Zeitdauer (17) der Umschaltpunkt auf Nachdruck (Zeitpunkt 12) gemessen wird;
diese Zeitdauer (17) als Prozeßparameter-Summenwert verwendet wird und zur Konstanthaltung des Prozeßparameter-Summenwertes von dessen Abweichung in an sich bekannter Art Steuer- und Regelvorgänge der Prozeßparameter abgeleitet werden.

2. Verfahren nach Anspruch 1,
dadurch gekennzeichnet,
daß der Kraftwert der Werkzeugfüllphase (9) mit maximal der Hälfte des Spritzkraftbegrenzungswertes (14) festgelegt wird.

3. Verfahren nach den Ansprüchen 1 und 2,
dadurch gekennzeichnet,
daß der Prozeßparameter-Summenwert als Maß der Qualitätsbewertung der gespritzten Werkstücke ermittelt wird.

4. Hydraulische Schaltung zur Durchführung des Verfahrens nach Anspruch 1,
dadurch gekennzeichnet,
daß dem Spritzzylinder (24) eine zentrale Strom- und Drucksteuerung vorgeschaltet ist, aus deren Druckleitung (22) nach einer Drossel (21) der Vorsteuerölstrom für ein Druckdifferenzventil (19) entnommen wird, dessen Vorsteuerdruck durch ein Proportionaldruckbegrenzungsventil (20) begrenzt wird, dem ein den Vorsteuerölstrom messender Druckmeldesensor (27) zugeordnet ist, wobei das Druckdifferenzventil (19) vor einem Proportionaldrosselventil (18) und einem darüber geschalteten Druckdifferenzsensor (23) in die Druckleitung (22) geschaltet ist.
